## Europäisches Patentamt
## European Patent Office
## Office européen des brevets

(19)

(11) Veröffentlichungsnummer: **0 019 263**
**B2**

(12) # NEUE EUROPÄISCHE PATENTSCHRIFT

(45) Veröffentlichungstag der neuen Patentschrift:
31.08.88

(51) Int. Cl.⁴: **G 02 B 21/02**

(21) Anmeldenummer: 80102638.6

(22) Anmeldetag: 13.05.80

(54) **Mikroskopoptiksystem.**

(30) Priorität: 17.05.79 DE 2919924

(43) Veröffentlichungstag der Anmeldung:
26.11.80 Patentblatt 80/24

(45) Bekanntmachung des Hinweises auf die Patenterteilung:
28.04.82 Patentblatt 82/17

(45) Bekanntmachung des Hinweises auf die Entscheidung
über den Einspruch:
31.08.88 Patentblatt 88/35

(84) Benannte Vertragsstaaten:
AT CH FR GB LI

(56) Entgegenhaltungen:
DE-B-1 472 082
DE-B-2 047 673
US-A-3 132 200
US-A-3 437 398
US-A-3 481 665
US-A-4 249 204

Leitz-Liste 560-24, VI/70/FY/SD
Leitz-Liste 512-82, VII/65/FY/L
Leitz Mitt. f. Wiss. u. Techn. Bd. IV, Nr. 5, S. 185-191
Jahrbuch f. Optik u. Feinmech. 1978, S. 60-96
Leitz-Liste 513-55a; VI/63/LX/SD
Notiz und Freigabe-Unterlagen zu "PLEZY" mit Optik L543
Zeichnung Nr. 22-015.001/Z1) für Objektivzwischenstück mit Optik L543
Leitz-Liste 36-9, XI/63/LX/B, Mikroprojektor mit Xenon-Brenner

(73) Patentinhaber: **Firma Carl Zeiss, Postfach 1369/1380, D-7082 Oberkochen (DE)**

(72) Erfinder: **Muchel, Franz, Dipl.- Phys., Lortzingstrasse 2, D-7923 Königsbronn (DE)**

(56) Entgegenhaltungen: (Fortsetzung)
Ausrüstungsliste zur Liste 36-9
Techn. Information zur Ausrüstung des Mikroprojektors vom 25.11.63
Leitz-Liste 512-99, XI/69/FY/HS, Abbildende und beleuchtende Optik des Mikroskops, Seite 10
Übersichtszeichnung "Xenon-Mikroprojektor" Sach-Nr. 31-61.00 (Z1)
Einzelteilzeichnung Nr. 31-61.55 US
Optik-Rechn. Nr. L 619 für Zwischensystem 170/00.
"ABC" de Optik, 1960, S. 773
Leitz-Liste 590-8 "Mikroprojektor mit Xenon-Brenner" XII/67/GX/B

EP 0 019 263 B2

## Beschreibung

Bei der Erfindung handelt es sich um ein Mikroskopoptiksystem das gestattet, die Objektive verschiedener Mikroskopsysteme untereinander austauschbar zu machen.

Die bekannten zur Zeit auf dem Markt befindlichen Mikroskope arbeiten nach verschiedenen, nicht kompatiblen Systemen, die sich

a) in der Ausgangsschnittweite der verwendeten Wechselobjektive und

b) im Korrektionszustand der Wechselobjektive unterscheiden.

Es ist bisher weitgehend üblich, in Mikroskopen Objektive mit endlicher Schnittweite zu verwenden. Diese Objektive erzeugen direkt ein Zwischenbild des Objektes, das mittels des Okulars beobachtet wird. Objektiv und Okular haben einen, durch die Lage des Zwischenbildes festgelegten definierten Abstand, d. h. bei Mikroskopen mit Objektiven endlicher Schnittweite ist die mechanische Tubuslänge eine bestimmte Größe.

Im allgemeinen wird bei Mikroskop-Objektiven mit endlicher Schnittweite - welche im folgenden als Objektive erster Art bezeichnet werden - die chromatische Querabweichung nicht voll auskorrigiert. Der Grad der Korrektur ist von Hersteller zu Hersteller verschieden. Die noch vorhandene chromatische Querabweichung im Zwischenbild wird durch spezielle Okulare kompensiert.

In den letzten Jahren sind Mikroskop-Objektive mit unendlicher Schnittweite entwickelt worden. Bei diesen besteht hinter dem Objektiv paralleler Strahlengang, so daß das Einbringen von Zusatzoptik (Strahlenteiler, Filter, etc.) leicht möglich ist. Das Zwischenbild wird bei Mikroskopobjektiven mit unendlicher Schnittweite - welche im folgenden als Objektive zweiter Art bezeichnet werden - mittels eines zusätzlichen Linsensystems, des sogenannten Tubuslinsensystems erzeugt.

Es ist klar, daß bei Mikroskop-Objektiven der zweiten Art die mechanische Tubuslänge keine definierte Größe ist: sie kann je nach Anforderung verschieden groß sein.

Es sind auch Mikroskop-Objektive mit unendlicher Schnittweite bekannt, die so auskorrigiert sind, daß in Verbindung mit dem Tubuslinsensystem ein aberrationsfreies Zwischenbild entsteht. Ein Hinweis darauf findet sich im "Jahrbuch für Optik und Feinmechanik 1978". Hierbei handelt es sich aber um spezielle Objektive mit monochromatischen Bildfehler, die ebenfalls durch daß Tubuslinsensystem behoben werden müssen.

Wenn nun ein Hersteller von Mikroskopen mit Objektiven der ersten auf solche mit Objektiven der zweiten Art übergehen möchte, so wäre das für ihn sehr teuer, da er für eine recht lange Übergangszeit den Bedürfnissen der Benutzer nach Ausbaumöglichkeit ihrer alten Geräte dadurch Rechnung tragen müßte, daß der Komponenten beider Systeme anbietet. Selbst dann taucht jedoch für einen Benutzer das Problem auf, daß er beim Übergang auf Mikroskope mit Objektiven der zweiten Art seine bisherigen Wechselobjektive mangels Kompatibilität nicht einsetzen kann.

Es ist aus der US-A-3 132 200 bekannt nicht auskorrigierte Mikroskop-Objektive, die unendliche Ausgangsschnittweite besitzen, mit einem Korrekturglied zu kombinieren, das fest im Tubus eingebaut ist und ein aberrationsfreies Zwischenbild erzeugt. Das Korrekturglied besitzt jedoch insbesondere wegen seiner monochromatischen Aberration nur für ein Wechselobjektiv der bestimmten Objektivserie optimale Korrekturwirkung. Das Einführen einer positiven Koma durch das Korrekturglied bedingt einen positiven Astigmatismus an dieser Stelle. Beide Fehler wirken sich bei Pupillenverschiebungen, wie sie bei Fokussierbewegungen zwischen Objektiv und Tubuslinse und beim Einbringen von Strahlteilern oder Filtern auftreten, besonders nachteilig aus.

Aus der DB-B-1 472 082 ist bekannt, ein die Schnittweite von Wechselobjektiven vergrößerndes feststehendes Korrekturglied in Form eines negativen Kittgliedes zu verwenden, das Bildfeldkrümmung und Astigmatismus kompensiert. Seine 5-fache vergrößernde Wirkung ist auf die Anpassung einer speziellen, niedrig vergrößernden Objektivserie zugeschnitten.

In der DE-C-2 047 673 ist ein ebenfalls feststehendes Korrekturglied beschrieben, das bei ähnlich korrigierender Wirkung wie das in der DE-B-1 472 082 vorgeschlagene die Ausgangsschnittweite der Wechselobjektive nach unendlich verlegt. Eine ebenfalls vorgesehene im Tubus feststehende, positive Einzellinse korrigiert den Farbquerfehler der Objektive und erzeugt ein aberrationsfreies Zwischenbild. Auch dieses Korrekturglied verändert den Abbildungsmaßstab der Wechselobjektive.

Bei allen diesen bekannten Korrektursystemen ist das Korrekturglied fest in den Tubus integriert und, legt damit die Art der zu verwendenden Objektivserien fest. Ein Umrüsten des Systems durch Einbau anderer Korrekturglieder ist zeitraubend und aufwendig und damit teuer. Diese Korrektursysteme ermöglichen Kompatibilität verschiedener Systeme also nur in dem Sinne, daß neue Objektivserien durch einmalige Umrüstung älterer Tuben verwendet werden können.

Aus der Firmenschrift "Mikroprojektor mit Xenon-Brenner" der Ernst Leitz Wetzlar GmbH ist ein Gerät bekannt, an dessen Objektivschieber neben Objektive mit unendlicher Schnittweite auch ein Objektiv mit endlicher Schnittweite verwendet werden kann. Hierzu ist ein achromatisches negatives Kittglied verwendet, das die Schnittweite des Endlich-Objektivs nach unendlich verlegt. Beide Objektivarten sind hier jedoch in Bezug auf die chromatische Aberrationen in gleicher Weise korrigiert.

Es ist nun die Aufgabe der vorliegenden Erfindung, ein Optiksystem für Mikroskope zu schaffen, welches Mikroskop-Objekive der ersten und zweiten Art voll kompatibel macht. Damit soll es möglich werden, Mikroskop-Objektive mit endlicher Schnittweite und chromatischer Querabwirkung im Zwischenbild an Mikroskopen zu verwenden, die für Objektive mit unendlicher Schnittweite und farbfreiem Zwischenbild konzipiert sind; zugleich sollen diese Mikroskop-Objektive mit unendlicher Schnittweite in Mikroskopen verwendet werden können, die für Objektive mit endlicher Schnittweite ausgebildet sind. Der Korrekturzustand der Mikroskop-Objektive erster und zweiter Art in Bezug auf die chromatische Vergrößerungsdifferenz im Zwischenbild ist also bei Verwendung des neuen Optiksystems unterschiedlich.

Diese Aufgabe wird gemäß dem kennzeichnenden Teil der Ansprüche 1 bzw. 2 dadurch gelöst, daß zur Erzeugung wechselseitiger Kompatibilität der beiden Objektivarten der chromatische Korrekturzustand der Objektive mit unendlicher Schnittweite so gewählt ist, daß sich das farbfehlerfreie Zwischenbild von einer dispersiven, bezüglich der CHL unterkorrigierten Tubuslinse erzeugen läßt,

dispersive Adapter mit negativer Brechkraft zur Befestigung an den Objektiven mit endlicher Schnittweite für den Betrieb in Verbindung mit der dispersiven Tubuslinse und dispersive Adapter mit positiver Brechkraft zur Befestigung an den Objektiven mit unendlicher Schnittweite vorgesehen sind,

die Dispersionen und die Brechkräfte der Adapter mit positiver Brechkraft untereindander gleich sind und übereinstimmen mit den entsprechenden Werten für die dispersive Tubuslinse und die Dispersionen und die Brechkräfte der Adapter mit negativer Brechkraft untereinander gleich sind und dem Betrage nach übereinstimmen mit dem entsprechenden Wert für die dispersive Tubuslinse und bei der Bemessung der Tubuslinse und der Adapter im wesentlichen die Bedingung

$$\sum_i \frac{L_i}{v_{di} \cdot f_i} = CHV \qquad (1)$$

eingehalten ist, wobei

$v_d$ = die Abbezahl der bei den Linsen bzw. Kittgliederkomponenten verwendeten Gläser,

f = die Brennweite der jeweiligen Linsen oder Kittgliederkomponeten,

L = die Entfernung ihrer Hauptebene von der Austrittspupille der in Verbindungen mit der Tubuslinse benutzten Objektive und

CHV = der zu kompensierende Farbquerfehler dieser Objektive ist.

Für Objektive endlicher Schnittweite, die in Bezug auf den Farblängsfehler (CHL) im Zwischenbild auskorrigiert sind, aber ein mit einem Farbquerfehler (CHV) behaftetes Zwischenbild in Verbindung mit einem achromatischen Telanlinsensystem erzeugen, wird die Aufgabe dadurch gelöst,

daß zur Erzielung wechselseitiger Kompatbilität der beiden Objektivarten das negative Glied des Telanlinsensystems aus dem Tubus entfernt und in Form eines achromatischen Adapters zur Befestigung am Objektiv mit endlicher Schnittweite ausgebildet ist,

der chromatischen Korrekturzustand der Objektive mit unendlicher Schnittweite so gewählt ist, daß sich das farbfehlerfreie Zwischenbild von einer dispersiven, bezüglich der CHL unterkorrigierten Tubuslinse erzeugen läßt,

dispersive Adapter mit negativer Brechkraft zur Befestigung an den Objektiven mit endlicher Brennweite für den Betrieb in Verbindung mit der dispersiven Tubuslinse und dispersive Adapter mit Brechkraft 0 (afokaler Adapter) zur Befestigung an den Objektiven mit unendlicher Schnittweite für den Betrieb in Verbindung mit dem positiven achromatischen Glied des Telanlinsensystems vorgesehen sind,

die Dispersion der Adapter mit Brechkraft 0 untereinander gleich ist und übereinstimmt mit dem entsprechenden Wert für die Tubuslinse und die Dispersionen und die Brechkräfte der Adapter mit negativer Brechkraft untereinander gleich sind und dem Betrage nach übereinstimmen mit dem entsprechenden Wert für die dispersive Tubuslinse (20), und bei der Bemessung der Tubuslinse (20) und der Adapter im wesentlichen die Bedingung

$$\sum_i \frac{L_i}{v_{di} \cdot f_i} = CHV \qquad (1)$$

eingehalten ist, wobei

$v_d$ = die Abbezahl der bei den Linsen bzw. Kittgliedkomponenten verwendeten Gläser,

f = die Brennweite der jeweiligen Linsen oder Kittgliedkomponenten,

L = die Entfernung ihrer Hauptebene von der Austrittspupille der in Verbindung mit der Tubuslinse benutzten Objektive und

CHV = der zu kompensierende Farbquerfehler dieser Objektive ist.

Für den Hersteller ergibt sich unter anderem der Vorteil, bei einem Systemwechsel in der Übergangsphase nicht die Objektive beider Arten fertigen und auf Lager halten zu müssen, da die Objektivserien der einen Art stets durch Kombination mit dem entsprechenden Adapter mit den Objektivserien der zweiten Art kompatibel sind. So kann der Hersteller dem Benutzer von Objektiven der ersten Art die Objektivserien dar zweiten Art zusammen mit den entsprechenden Adaptern liefern, die auch bereits in die Objektivgehäuse eingebaut sein können.

Andererseits kann der Benutzer den Übergang auf das Objektivsystem zweiter Art unter Beibehaltung seiner Wechselobjektive der ersten Art leicht vollziehen, da diese lediglich mit den dafür vorgesehenen Adaptern ausgerüstet zu werden brauchen.

Die Adapter können so eingefaßt sein, daß eine leicht auswechselbare Befestigung am Objektivgehäuse ermöglicht wird. In diesem Falle ist der Benutzer selbst in der Lage, die Objektive, die er einer anderweitigen Benutzung zugänglich machen will, mit dem dafür nötigen Adapter zu versehen.

Da die Adapter und die Tubuslinse des neuen Systems hinsichtlich des Betrages über Brechkraft und ihrer Dispersion gleich sind wird zum einen erreicht, daß der Abbildungsmaßstab von Objektiven der ersten Art sich bei der Benutzung an neuen Tuben nicht ändert. Zum anderen ergibt sich für diesen Fall eine recht einfache Abhängigkeit der chromatischen Aberrationen im Zwischenbild von den Systemparametern, die dann leicht im Hinblick auf ein farbfreies Zwischenbild optimiert werden können.

Dabei erweist es sich als vorteilhaft, die Tubuslinsen der Geräte zweiter Art mit ihren Hauptebenen in einem Abstand von der Objektebene anzuordnen, der dem 0,5- bis 1,3-fachen ihrer Brennweite entspricht. Der Einfluß der Stellung der Tubuslinse auf den Farbquerfehler im Zwischenbild kann in diesem Bereich unter Zugrundelegung der zur Zeit üblichen Werte für den Farbvegrößerungsfehler von Objektiven erster Art leicht mit Hilfe der Dispersion der Adapter bzw. der Tubuslinse kompensiert werden. Es ist nämlich dann durch geeignete Wahl verfügbarer Glassorten hinsichtlich ihrer Dispersion möglich, die Tubuslinse und die Adapter unter Vermeidung von Kittgliedern als Einzellinsen auszubilden, um die wechselseitige chromatische Korrektur des Zwischenbildes zu erzielen.

Wenn ein zusätzlicher afokaler Adapter vorgesehen ist, der in Form eines Kittgliedes die entsprechende chromatische Korrektur erzeugt, dann erweitert sich die Kompabilität der Systeme auch auf die Fälle, bei denen im vorstehenden Sinne chromatischen nicht korrigierte Objektive endlicher Ausgangsschnittweite, die in Verbindung mit einer parallelen Strahlengang erzeugenden Tubusoptik (Telansystem) benutzt werden, durch aberrationsfreie Wechselobjektive mit unendlicher Ausgangsschnittweite ersetzt werden.

Es ist dann möglich, die optischen Eigenschaften des negativen Gliedes des Telansystems und die des positiven Adapters für die Objektive unendlicher Ausgangsschnittweite in einem dispersiven afokalen Adapter zusammenzufassen. Dadurch werden die Anzahl der Linsenflächen und somit Reflexionen im Tubus vermindert. Das für die Objektive endlicher Ausgangsschnittweite benötigte negative achromatische Glied wird an diesem Objektiven in Form eines achromatischen Adapters befestigt.

Wird der dispersive afokale Adapter in den Tubus integriert, dann ist in Verbindung mit der verbleibenden positiven achromatischen Tubuslinse auf einfache Weise die Erzeugung eines farbfreien Zwischenbildes möglich. Die Abhängigkeit des Farbquerfehlers im Zwischenbild von der Stellung des dispersiven Gliedes bietet weiterhin die Möglichkeit, mit einfachen Mitteln den Wunsch nach völliger Eliminierung des Farbquerfehlers individuell für alle Objektive zu realisieren.

Denn bei bestimmten Anwendungen (z. B. bei der Mikrofotographie) machen sich oft auch kleine Farbfehler negativ bemerkbar, die sich nicht völlig ausschließen lassen, da z. B. Objektive der gleichen Serie aber mit unterschiedlichen Abbildungsmaßstab niemals exakt denselben chromatischen Korrekturzustand aufweisen.

Dies wird dadurch erreicht, daß das afokale, dispersive Glied im Mikroskoptubus, im Bereich parallelen Strahlenganges zwischen dem Objektiv und dem achromatischen Glied achsial verschiebbar ist.

Damit wird es möglich, ohne die Zwischenbildebene zu verschieben, d. h. bei glecihbleibender Bildschärfe, lediglich durch Verschieben eines Gliedes kleine Abweichungen in der chromatischen Korrektur einzelner Objektive zu kompensieren, d. h. ein völlig farbfreies Zwischenbild zu erzeugen.

Im Bereich paralleler Strahlenganges zwischen dem Objektiv und einem achromatischen Tubuslinsensystem ist das Verschieben des Justierelements außerdem ohne Einfluß auf die monochromatischen Aberrationen und die chromatischen Längsfehler. Nach einem Entfernen des Justierelements können an den Tubus mit dem verbleibenden achromatischen Tubuslinsensystem leicht auch Objektive erster Art adaptiert werden, deren chromatische Korrektur ohne Berücksichtigung des afokalen Korrekturgliedes erfolgte.

Anhand der Figuren 1 - 9 der beigefügten Zeichnungen, die jeweils schematisch den Lukenstrahlengang verschiedener Mikroskopsysteme vom Objekt bis zum Zwischenbild skizzieren, wird der Erfindungsgedanke näher erläutert:

Figur 1 skizziert die Abbildung des Objekts mit einem Objektiv endlicher Ausgangsschnittweite;
Figur 2 skizziert die Abbildung mit einem Objektiv unendlicher Ausgangsschnittweite;
Figur 3 skizziert die Abbildung mit einem adaptiertem Objektiv unendlicher Ausgangsschnittweite;
Figur 4 skizziert die Abbildung mit einem adaptiertem Objektiv endlicher Ausgangsschnittweite;
Figur 5 skizziert die Abbildung durch ein Objektiv endlicher Ausgangsschnittweite mit Telansystem;

Figur 6 skizziert die gleiche Abbildung bei geänderter Tubusoptik und adaptiertem Objektiv endlicher Ausgangsschnittweite;

Figur 7 skizziert die gleiche Abbildung wie Fig. 6 jedoch mit adaptiertem Objektiv unendlicher Ausgangsschnittweite;

Figur 8 skizziert die gleiche Abbildung wie Fig. 7 mit nochmals geänderter Tubusoptik;

Figur 9 skizziert die gleiche Abbildung wie Fig. 8 mit adaptiertem Objektiv endlicher Ausgangsschnittweite.

Die Figuren 10 - 16 zeigen Beispiele für den normierten Verlauf der chromatischen Längsabweichung in Abhängigkeit der Wellenlänge für die Objektive, Adapter und Tubuslinsen in den Anordnungan nach den Figuren 1 - 9.

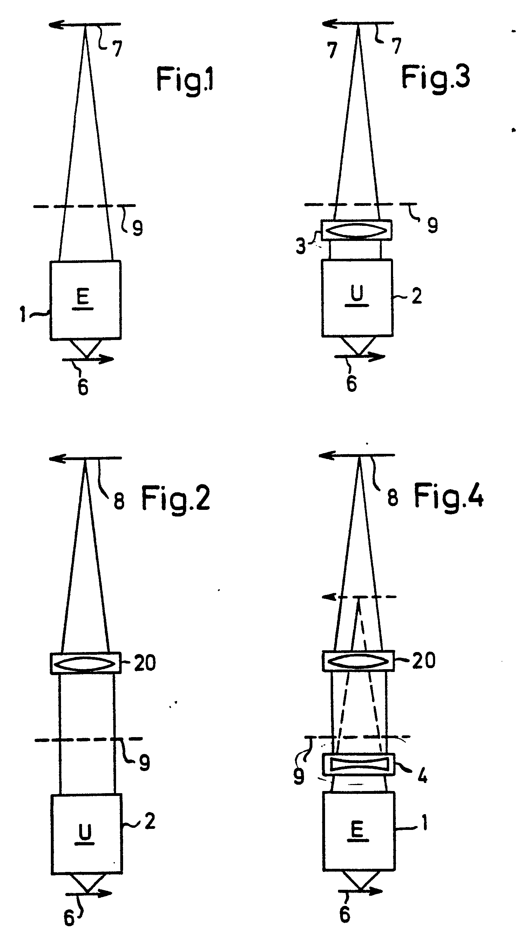

In Fig. 1 erzeugt ein Objektiv 1 endlicher Schnittweite vom Objekts ein mit Farbquerfehler behaftetes Zwischenbild 7 im Endlichen und entspricht damit einem System erster Art. Mit 9 ist die mechanische Begrenzung des Objektivgehäuses bezeichnet.

Fig. 2 zeigt dagegen ein Mikroskop-Objektiv 2 mit unendlicher Schnittweite, mit dem das Objekt 6 nach Unendlich abgebildet wird. Ein Tubuslinsensystem 20 mit unterkorrigierter chromatischer Längsabweichung erzeugt das farbfreie Zwischenbild 8 ohne die monochromatischen Bildfehler, die bereits im Objektiv 2 auskorrigiert sind, zu beeinflußen.

Die Brechkraft des Tubuslinsensystem 20 ist so gewählt, daß ein Adapter 4 mit dem Betrage nach gleicher aber negativer Brechkraft und gleicher Dispersion mit einem herkömmlichen Objektiv 1, an dessen Gehäuse er befestigt ist, das Objektiv 2 in Fig. 2 ersetzen kann (Fig. 4). Mit Hilfe des Adapters 4, der die Schnittweite herkömmlicher Objektive 1 nach Unendlich verlegt, können diese also an Mikroskoptuben zweiter Art verwendet werden ohne daß sich ihr Abbildungsmaßstab ändert. Das Zwischenbild ist farbfrei.

Versieht man, wie in Fig. 3 dargestellt, ein Objektiv 2 mit unendlicher Schnittweite mit einem Adapter 3, der dem Adapter 7 (Fig. 4) bis auf das Vorzeichen der Brechkraft entspricht und somit die gleiche Brechkraft wie das Tubuslinsensystem 20 besitzt, dann kann mit dieser Kombination ein Objektiv endlicher Ausgangsschnittweite ebenfalls ohne Änderung des Abbildungsmaßstabes ersetzt werden. Das Zwischenbild 7 besitzt den gleichen Farbquerfehler wie das in Fig. 1, der im Gegensatz zum Farblängsfehler von der Stellung des Adapters 3 (Abstand zur Objektivpupille) abhängt.

In dem mit Hilfe der Figuren 1 - 4 skizzierten System ist die Zahl der freien Parameter überschaubar. Da von der Voraussetzung ausgegangen wird, dan beide Objektivklassen U und E bezüglich der monochromatischen Bildfehler auskorrigiert sind und die Brennweite der Adapter 3 und 4 und des Tubuslinsensystems 20 entsprechend den gängigen Werten für verwendete optische Tubuslängen im Dezimeterbereich liegt, kann auf eine Betrachtung der Linsenformen (Radien), die ohne Einfluß auf die chromatischen Bildfehler sind, bei den Adaptern bzw. bei der Tubusoptik verzichtet werden. Die Radien können vielmehr so gewählt werden, daß die Hauptebenen der Adapter bei den verschiedeen Objektiven stets die Lage einnehmen, die zur Erzielung der gewünschten chromatischen Korrektur erforderlich ist, ohne die Adapter selbst in diese Lagen zu bringen.

Ausgehend von dem jeweiligen Wert für die Farbquerfehler im Zwischenbild 7 nach Fig. 1 sind somit

a) die, für die Adapter 3, 4 und für das Tubuslinsensystem 20 vorzugsweise gleiche Dispersion

b) die Lage der Hauptebenen der Adapter und des Tubuslinsensystems

c) der chromatische Korrekturzustand der Objektive

so zu wählen, daß sich für die Anordnungen nach den Figuren 2 und ein chromatisch auskorrigiertes Zwischenbild 8 ergibt und für die Anordnung nach Fig. 3 der gleiche Farbquerfehler im Zwischenbild 7 wie in Fig. 1.

Das geschieht dadurch, daß bei der Auswahl dieser Größen im wesentlichen folgende Beziehung eingehalten wird:

$$\sum_i \frac{L_i}{v_{c_i} \cdot f_i} = CHV \qquad (1)$$

wobei

$v_d$ = die Abbezahl der bei den Linsen bzw. Kittgliedkomponenten verwendeten Gläser,

$f$ = die Brennweite der jeweiligen Linsen oder Kittgliedkomponenten,

$L$ = die Entfernung ihrer Hauptebenen von der Austrittspupille der in Verbindung mit dem Tubuslinsensystem benutzten Objektive und,

$CHV$ = der zu kompensierende Farbquerfehler dieser Objektive ist.

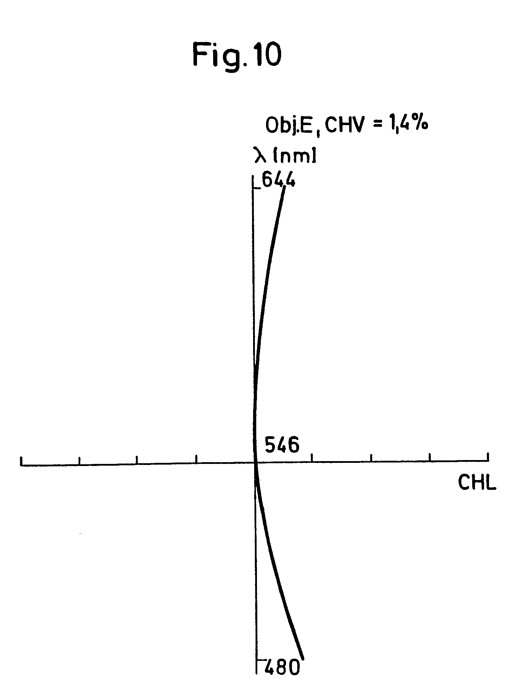

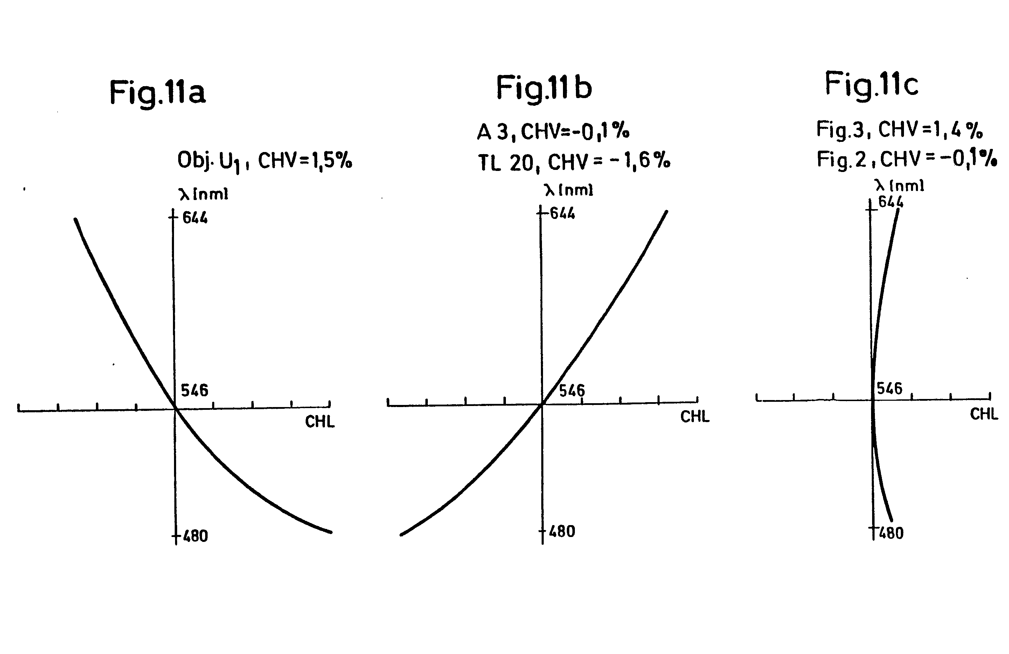

Die Figuren 10 - 14 verdeutlichen dies. Fig. 10 zeigt den normierten Verlauf der chromatischen Längsabweichung (CHL) für ein Objektiv E erster Art (Achromat mit Abbildungsmaßstab 10x, Apertur 0.22, Ausgangsschnittweite 160 mm), dessen Zwischenbild einen Farbvergrößerungsfehler (CHV) von 1,4 % besitzt. Das entsprechende Objektiv U zweiter Art, dessen Verlauf der CHL Fig. 11a zeigt, ist so ausgelegt (CHV = 1,5 %), daß eine positive Einzellinse mit der Brennweite f = 160 mm, deren Verlauf der CHL Fig. 11b zeigt (f = 160 mm, $v_d$ = 20,4), als Tubuslinse im Abstand A = 0,45 f von der Objektebene (Fig. 2) die Farbfehler des Objektivs U kompensiert und als Adapter am Objektivgehäuse (Fig. 3) ein Zwischenbild mit einer CHV von 1,4 % erzeugt.

Den resultierenden Verlauf der CHL, der wegen des parallelen Strahlenganges von der Stellung der Linse unabhängig ist, zeigt Fig. 11c. Der Abbildungsmaßstab und die Apertur des Objektivs U stimmen mit den entsprechenden Werten des Objektivs E überein.

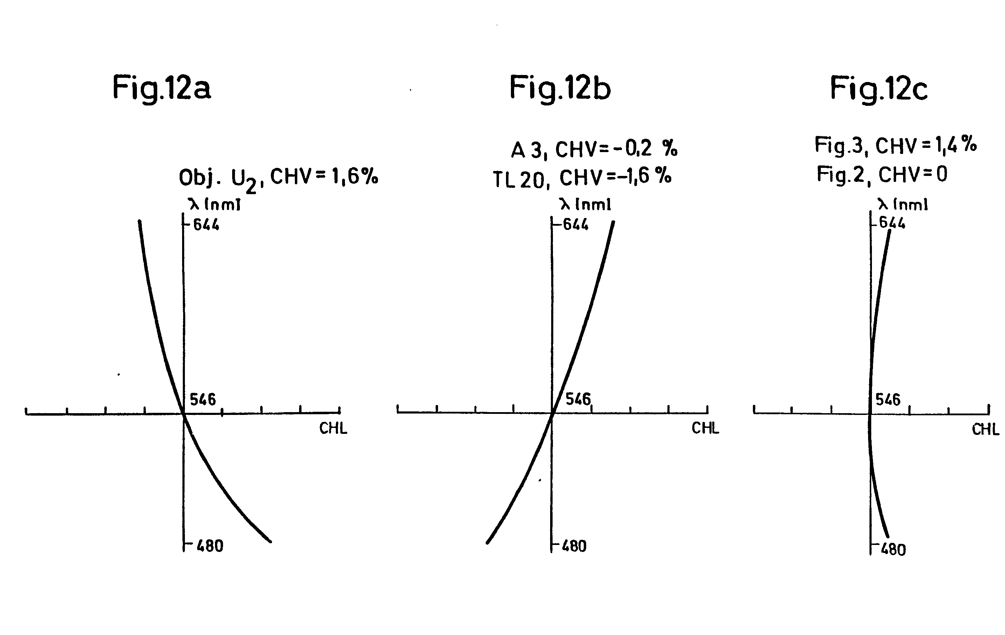

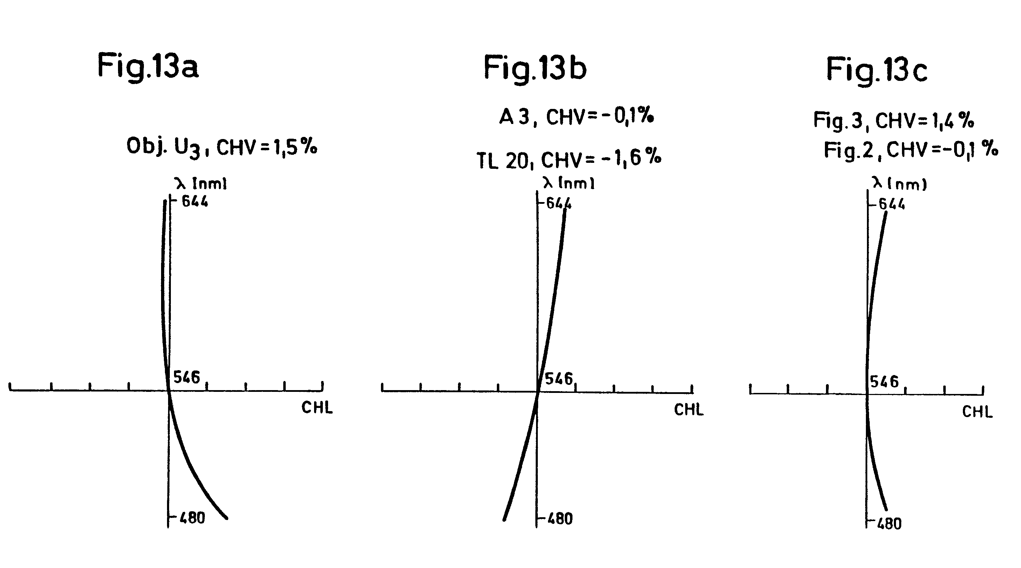

Wählt man bei der Projektierung der Objektive U andere chromatische Korrekturzustände, wie z. B. in Fig. 12 oder Fig. 13 dargestellt, dann kann bei Verwendung geeigneten Materials für den Adapter 3 und die Tubuslinse 20 ($v_d$ = 41,5 für Fig. 12b; $v_d$ = 84,5 für Fig. 13b) sowie deren Steilung (L = 105 mm in Fig. 12b; L = 220 mm in Fig. 13b) unter Beibehaltung der Brennweite (f = 160 mm) doch jeweils die gewünschte Zwischenbildkorrektur im Sinne der Kompatibilität mit dem nach Fig. 10 korrigierten Objektiv E erzielt werden. Im Rahmen von Gleichung 1 können natürlich auch andere Parameter, z. B. L, vorgegeben werden und die Objektive U für das Optiksystem entsprechend berechnet werden. Ergeben sich zum Kompensieren der CHV mittels Einzellinsen (i = 1) Werte für die Dispersion, die mit zur Zeit bekannten Gläsern nicht erreicht werden, dann sind die Adapter und die Tubuslinse z. B. als Kittglieder so zu dimensionieren, daß sich das gewünschte dispersive Verhalten ergibt.

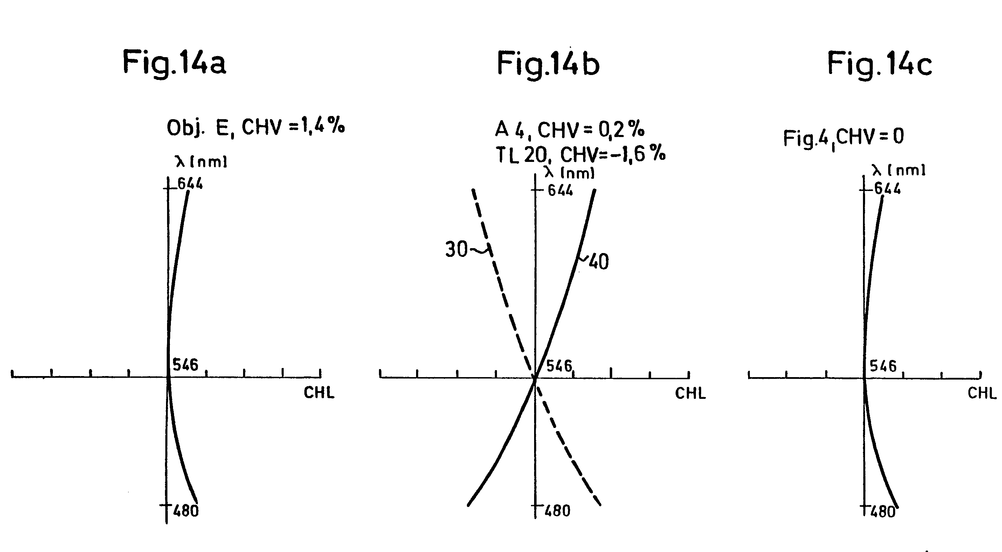

Fig. 14 beschreibt die chromatische Korrektur des in Fig. 4 dargestellten Systems. Dabei kompensieren sich die Farblängsfehler 30 des negativen Adapters 4 und die Farblängsfehler 40 der positiven Tubuslinse 20 aufgrund ihrer gleichen Dispersion ($v_d$ = 41,5) so daß als Resultat in Fig. 14c der gleiche Verlauf der CHL wie in Fig. 14a bzw. Fig. 10 vorliegt. Der Farbquerfehler (CHV) im Zwischenbild nach Fig. 14c wird zu Null, da der geringe Beitrag des in der Nähe der Objektivpupille angebrachten Adapters 4 zur CHV im Vergleich zum positiven Adapter 3 in Fig. 12b mit umgekehrten Vorzeichen eingeht und somit die Differenz in der CHV beider Objektivtypen E und U ausgeglichen wird.

Die Werte für die CHV in den Figuren 11 - 14 lassen sich alle aus Gleichung 1 berechnen, wenn berücksichtigt wird, daß die Adapter 3 und 4 etwa einen Abstand von 10 mm von der Objektivpupille besitzen.

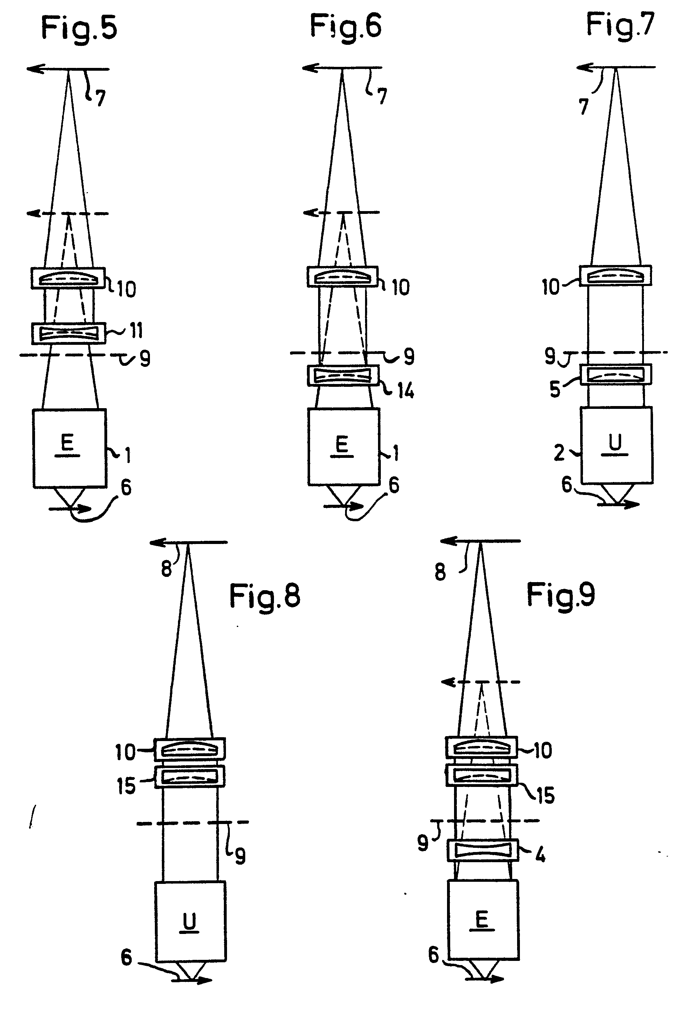

In den Figuren 5 - 7 wird die Erzielung gegenseitiger Kompatibilität der vorstehend beschriebenen Systeme mit Hilfe eines achromatischen negativen Adapters 14 und eines weiteren afokalen Adapters 5 skizziert, wobei davon ausgegangen wird, daß das System erster Art ein sog. Telansystem enthält, das den Objekt-Bildabstand mit Hilfe eines positiven (10) und negativen (11) achromatischen Gliedes an die Stativabmessungen anpaßt. Da die Verwendung von Objektiven E an neuen Tuben zweiter Art mit Hilfe des negativen Adapters 4 in Fig. 4 bereits skizziert wurde, wird nur noch die Austauschbarkeit der beiden Objektivtypen E und U an Tuben des Systems erster Art gezeigt.

Dazu empfiehlt es sich, das negative Glied 11 des Telansystems aus dem auf Objektive erster Art zugeschnittenen Tubus zu entfernen (Bild 6).

Am Gehäuse des Objektivs 1 ist jetzt ein negativer achromatischer Adapter 14 angebracht, der den ursprünglichen Zustand nach Bild 5 wieder herstellt.

Mit diesem teilentleerten Tubus kann jedoch ein Objektiv zweiter Art unter Verwendung eines afokalen Adapters 5 kombiniert werden (Bild 7), der das gleiche dispersive Verhalten wie der Adapter 3 in Fig. 3 besitzt. In Verbindung mit dem achromatischen positiven Glied 10 des ursprünglichen Telansystems erhält man wieder ein Zwischenbild 7 mit Farbquerfehler.

Eine weitere sinnvolle Möglichkeit, die Objektive E und U an einen derartigen Tubus zu adaptieren zeigen Bild 8 und 9. Hier wird das afokale Glied 15 mit den dispersiven Eigenschaften des Adapters 5 im Tubus in der Nähe des achromatischen Gliedes 10 angeordnet. Dieses System besitzt hinsichtlich seiner optischen Wirkung den gleichen Aufbau wie das in Fig. 2 und 4 skizzierte und unterscheidet sich lediglich dadurch, daß Brechkraft und Dispersion der Tubuslinse 20 in Fig. 2 und 4 durch die getrennten Glieder 10 und 15 aufgebracht werden.

An derart umgestalteten Tuben des Systems erster Art lassen sich, wie Fig. 8 zeigt, Objektive U zweiter Art ohne Adapter (Fig. 8) und Objektive E mit dem hinsichtlich seiner chromatischen Längsabweichung überkorrigierten Adapter 4 (Fig. 9) verwenden. Das resultierende Zwischenbild ist hier in Fig. 2 und 4 farbfrei.

Diese auf den arsten Blick umständliche Lösung, bei der statt einer Einzellinse mit gleicher Wirkung 2 Kittglieder benutzt werden, hat jedoch den Vorteil, daß chromatische Korrekturen im Zwischenbild vorgenommen werden können, ohne dessen Lage zu beeinflussen. Insbesondere ist eine auswechselbare Befestigung des Gliedes 15 möglich, so daß an einem Tubus mit dem gleichen Objektiv beide Korrekturzustände des Zwischenbildes nach Fig. 6 bzw. 7 oder nach Fig. 8 bzw. 9 realisiert werden können.

Durch achsiales Verschieben des Gliedes 15 läßt sich der Farbquerfehler im Zwischenbild 8 auf einfache Weise völlig kompensieren, wodurch ohne Verstellung der Schärfenebene kleine Differenzen im Korrekturzustand verschiedener Objektive oder Fertigungstoleranzen ausgeglichen werden können. Zur Realisierung dieser besonders für die Farbfotographie mikroskopischer Objekte interessanten Möglichkeit sind am Tubus Einstellelemente vorhanden, mit den sich die besagte Längsverschiebung des Gliedes 15 reproduzierbar und kontinuierlich durchführen läßt. Natürlich ist die Verwendung eines derärtigen Elements nicht nur in Verbindung mit dem vorstehend skizzierten Optiksystem möglich. Auch ohne Adapter vorzusehen, mit denen Objektive erster und zweiter Art kompatibel gemacht werden, (z. B. für nicht kompatible Spezialmikroskope) ist der Einsatz von Justierelementen zur völligen Eliminierung des Farbquerfehlers im Zwischenbild denkbar und sinnvoll.

Die mit Hilfe der Figuren 10 - 14 illustrierten Korrektuwirkungen der Adapter für die Anordnungen nach den Figuren 1 - 4 können ohne Schwierigkeiten auf die Anordnungen nach den Figuren 5 - 9 übertragen werden.

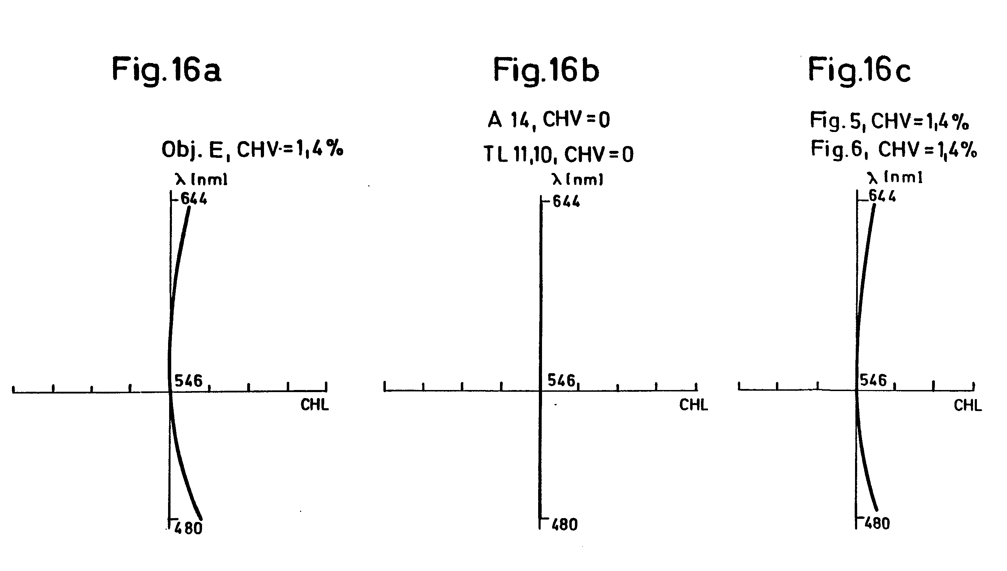

Dazu zeigt Fig. 16a nochmals den Verlauf der CHL des Objektivs E wie in Fig. 10. Die in Fig. 5 und 6 skizzierte achromatische Tubusoptik 11, 10 bzw. der Adapter 14 bleiben nahezu ohne Einfluß auf den Farbquerfehler (Fig. 16b), so daß für beide Fälle der in Fig. 16c dargestellte Verlauf der CHL resultiert, der im wesentlichen mit Fig. 16a übereinstimmt.

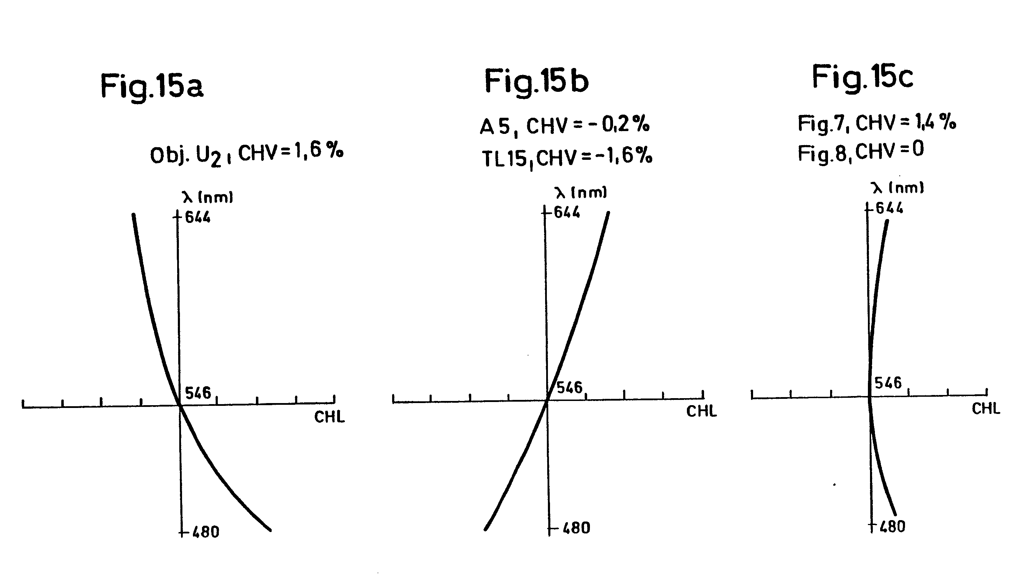

Fig. 15 zeigt dagegen die Kompensation der Farbfehler des Objektivs U gemäß einer Anordnung nach Fig. 7 durch den Adapter 5 (Fig. 15b), der bei gleicher Stellung wieder Adapter 3 in Fig. 3 und bei gleichem dispersiven Verhalten (vergleiche Fig. 12b) das in Fig. 15c dargestellte Resultat mit einer Farbquerfehler von 1,4 % ergibt. Der Adapter 5 besteht aus einer positiven Linse (f = 46,5 mm; $v_d$ = 33,8) und einer negativen Linse (f = -46,5; $v_d$ = 46,5), die miteinander verkittet sind.

Die Anordnung nach Fig. 8, in der das aus dem gleichen Kittglied wie der Adapter 5 bestehende nun zum Tubuslinsensystem gehörende Glied 15 für ein farbfreies Zwischenbild 8 sorgt, ist ebenfalls durch die Fig. 15 beschrieben. Der im Vergleich zu Fig. 7 von ca. 10 mm auf ca. 105 mm geänderte Wert für L wirkt sich nicht auf den Verlauf der CHL aus, da sich der Adapter 5 bzw. das Tubuslinsensystem 15 im Bereich parallelen Strahlenganges befinden; es ergibt sich also wieder der Verlauf der CHL nach Fig. 15b während die CHV des Objektivs 2 in diesem Falle völlig kompensiert wird (vergleiche Gleichung 1).

Für die Korrektur des Objektivs U in Fig. 9 ist die Darstellung nach Fig. 14 zu übernehmen, wobei dort der Graph 40 durch den nahezu identischen Graphen in Fig. 15b ersetzt wird. Der Einfluß der achromatischen Tubuslinse 10 (vergleiche Fig. 16b) kann vernachlässigt werden, so daß sich auch für die Anordnung nach Fig. 9 der in Fig. 14c skizzierte Verlauf der CHL ergibt.

**Patentansprüche**

1. Mikroskopoptiksystem bestehend aus
- Objektiven (1) endlicher Schnittweite, die in Bezug die in Bezug auf den Farblängsfehler (CHL) im Zwischenbild auskorrigiert sind aber ein mit einem Farbquerfehler (CHV) behaftetes Zwischenbild (7) erzeugen,
- und Objektiven mit unendlicher Schnittweite, die in Verbindung mit einer Tubuslinse (20) ein bezüglich Farblängs- (CHL) und Farbquerfehler (CHV) korrigiertes Zwischenbild (8) erzeugen, dadurch gekennzeichnet, daß zur Erzeugen wechselseitiger Kompatibilität der beiden Objektivarten
- der chromatische Korrekturzustand der Objektive (2) mit undendlicher Schnittweite so gewählt ist, daß sich das farbfehlerfreie Zwischenbild (8) von einer dispersiven, bezüglich der CHL unterkorrigierten Tubuslinse (20) erzeugen läßt,
- dispersive Adapter (4) mit negativer Brechkraft zur Befestigung an den Objektiven (1) mit endlicher Schnittweite für den Betrieb in Verbindung mit der dispersiven Tubuslinse (20) und dispersive Adapter (3) mit positiver Brechkraft zur Befestigung an den Objektiven (2) mit unendlicher Schnittweite vorgesehen sind,
- die Dispersionen und die Brechkräfte der Adapter (3) mit positiver Brechkraft untereinander gleich sind und übereinstimmen mit den entsprechenden Werten für die dispersive Tubuslinse (20) und die Dispersionen und die Brechkräfte der Adapter (4) mit negativer Brechkraft untereinander gleich sind und dem Betrage nach übereinstimmen mit dem entsprechenden Wert für die dispersive Tubuslinse (20)
- und bei der Bemessung der Tubuslinse (20) und der Adapter im wesentlichen die Bedingung

$$\sum_i \frac{L_i}{v_{di} \cdot f_i} = CHV \qquad (1)$$

eingehalten ist, wobei
$v_d$ = die Abbezahl der bei den Linsen bzw. Kittgliedkomponenten verwendeten Gläser,
f = die Brennweite der jeweiligen Linsen oder Kittgliedkomponenten,
L = die Entfernung ihrer Hauptebene von der Austrittspupille der in Verbindung mit der Tubuslinse benutzten Objektive und
CHV = der zu kompensierende Farbquerfehler dieser Objektive ist.

2. Mikroskopoptiksystem bestehend aus
- Objektiven (1) endlicher Schnittweite, die in bezug auf den Farblängsfehler (CHL) im Zwischenbild auskorrigiert sind, aber ein mit einem Farbquerfehler (CHV) behaftetes Zwischenbild (7) in Verbindung mit einem achromatischen Telanlinsensystem (10, 11) erzeugen und
- Objektiven (2) unendlicher Schnittweite, die in Verbindung mit einer Tubuslinse (20) ein bezüglich Farblängs- (CHL) und Farbquerfehler (CHV) korrigiertes Zwischenbild (8) erzeugen, dadurch gekennzeichnet, daß zur Erzielung wechselseitiger Kompatibilität der beiden Objektivarten (1, 2)
- das negative Glied (11) des Telanlinsensystems aus dem Tubus entfernt und in Form eines achromatischen Adapters (14) zur Befestigung am Objektiv (1) mit endlicher Schnittweite ausgebildet ist
- der chromatische Korrekturzustand der Objektive (2) mit unendlicher Schnittweite so gewählt ist, daß sich das farbfehlerfreie Zwischenbild (8) von einer dispersiven, bezüglich der CHL unterkorrigierten Tubuslinse (20) erzeugen läßt,

- dispersive Adapter (4) mit negativer Brechkraft zur Befestigung an den Objektiven (1) mit endlicher Brennweite für den Betrieb in Verbindungen mit der dispersiven Tubuslinse (20) und dispersive Adapter (5) mit Brechkraft 0 (afokaler Adapter) zur Befestigung an den Objektiven (2) mit unendlicher Schnittweite für den Betrieb in Verbindung mit dem positiven achromatischen Glied (10) des Telanlinsensystems (10, 11) vorgesehen sind,

- die Dispersion der Adapter mit Brechkraft 0 untereinander gleich ist und übereinstimmt mit dem entsprechenden Wert für die Tubuslinse (20) und die Dispersionen und die Brechkräfte der Adapter (4) mit negativer Brechkraft untereinander gleich sind und dem Betrage nach übereinstimmen mit dem entsprechenden Wert für die dispersive Tubuslinse (20),

- und bei der Bemessung der Tubuslinse (20) und der Adapter im wesentlichen die Bedingung

$$\lessgtr_i \frac{L_i}{v_{di} \cdot f_i} = CHV \qquad (1)$$

eingehalten ist, wobei

$v_d$ = die Abbezahl der bei den Linsen bzw. Kittgliedkomponenten verwendeten Gläser,

$f$ = die Brennweite der jeweiligen Linsen oder Kittgliedkomponenten,

$L$ = die Entfernung ihrer Hauptebene von der Austrittspupille der in Verbindung mit der Tubuslinse benutzten Objektive und

$CHV$ = der zu kompensierende Farbquerfehler dieser Objektive ist.

3. Optiksystem nach Anspruch 1 oder 2, dadurch gekennzeichnet, daß die Tubuslinse (20) eine Einzellinse ist, deren Hauptebenen vom Objekt (6) um das 0,5- bis 1,3-fache ihrer Brennweite entfernt sind.

4. Optiksystem nach Anspruch 1 oder 2, dadurch gekennzeichnet, daß die dispersive Tubuslinse aus einem positiven achromatischen Glied (10) und einem afokalen dispersiven Glied (15) besteht.

5. Optiksystem nach Anspruch 4, dadurch gekennzeichnet, daß das afokale dispersive Glied (15) um das 0,5- bis 1,3-fache der Brennweite des positiven achromatischen Glieds (10) vom Objekt (6) entfernt ist.

6. Optiksystem nach Anspruch 1 oder 2, dadurch gekennzeichnet, daß die Adapter eine Fassung besitzen, mit der sie auswechselbar an den Objektivgehäusen befestigt sind.

7. Optiksystem nach Anspruch 4, dadurch gekennzeichnet, daß das afokale, dispersive Glied (15) im Mikroskoptubus im Bereich parallelen Strahlenganges zwischen dem Objektiv und dem achromatischen Glied (10) achsial verschiebbar ist und als Justierelement zur Einstellung des Farbquerfehlers dient.

## Claims

1. Optical system for microscopes consisting of

- objectives (1) with a finite back focal distance which are fully corrected for longitudinal chromatic aberration (CHL) in the intermediate image but which generate an intermediate image (7) with lateral chromatic aberration (CHV),

- and objectives with an infinite back focal distance which, in conjunction with a tube lens (20), generate an intermediate image (8) corrected for longitudinal chromatic aberration (CHL) and lateral chromatic aberration (CHV),

characterized by the fact that in order to achieve mutual compatibility of the two types of objective

- the state of chromatic correction of the objectives (2) with an infinite back focal distance is selected so that the intermediate image (8) free from chromatic aberration can be produced by a dispersive tube lens (20) which is undercorrected for longitudinal chromatic aberration,

- that provision is made for dispersive adapters (4) with a negative refractive power for mounting on the objectives (1) with a finite back focal distance for use with the dispersive tube lens (20), and for dispersive adapters (3) with a positive refractive power for mounting on the objectives (2) with an infinite back focal distance,

- that the dispersions and the refractive powers of all adapters (3) with a positive refractive power are identical and are in agreement with the corresponding values of the dispersive tube lens (20), and the dispersions and the refractive powers of all adapters (4) with a negative refractive power are identical and are in agreement with the corresponding numerical values of the dispersive tube lens (20),

- and that the following condition is essentially satisfied by the specifications of the tube lens (20) and of the adapters:

$$\lessgtr_i \frac{L_i}{v_{di} \times f_i} = CHV$$

where

$v_d$ = the Abbe number of the glass types used in the lenses and cemented components,

$f$ = the focal length of the lenses or cemented components,

$L$ = the distance of their principal planes from the exit pupil of the objectives used together with the tube lens,

$CHV$ = the lateral chromatic aberration of these objectives to be compensated.

2. Optical system for microscopes consisting of

- objectives (1) with a finite back focal distance which are fully corrected for longitudinal chromatic aberration (CHL) in the intermediate image but which generate an intermediate image (7) with lateral chromatic aberration (CHV) in conjunction with an achromatic Telan lens system (10, 11) and
- objectives (2) with an infinite back focal distance which, in conjunction with a tube lens (20), generate an intermediate image (8) corrected for longitudinal chromatic aberration (CHL) and lateral chromatic aberration (CHV),

characterized by the fact that in order to achieve mutual compatibility of the two types of objective (1, 2)
- the negative element (11) of the Telan lens system is removed from the tube and is designed as an achromatic adapter (14) for mounting on the objective (1) with a finite back focal distance;
- that the state of chromatic correction of the objectives (2) with an infinite back focal distance is selected so that the intermediate image (8) free from chromatic aberration can be produced by a dispersive tube lens (20) which is undercorrected for longitudinal chromatic aberration (CHL);
- that provision is made for dispersive adapters (4) with a negative refractive power for mounting on the objectives (1) with a finite focal length for use with the dispersive tube lens (20), and for dispersive adapters (5) with the refractive power 0 (afocal adapter) for mounting on the objectives (2) with a infinite back focal distance for the use with the positive achromatic element (10) of the Telan lens system (10, 11);
- that the dispersion of all adapters with the refractive power 0 is identical and is in agreement with the corresponding value of the tube lens (20), and that the dispersions and the refractive powers of all adapters (4) with a negative refraction power are identical and their numerical values are in agreement with the corresponding values of the tube lens (20),
- and that the following condition is essentially satisfied by the specifications of the tube lens (20) and of the adapters:

$$\sum_i \frac{L_i}{v_{di} \times f_i} = -CHV \quad (1)$$

where
$v_d$ = the Abbe number of the glass types used in the lenses and cemented components,
$f$ = the focal length of the lenses and cemented components,
$L$ = the distance of their principal planes from the exit pupil of the objectives used with the tube lens,
CHV = the lateral chromatic aberration of these objectives to be compensated.

3. Optical system according to claim 1 or 2, characterized by the fact that the tube lens (20) is a single lens whose principal planes are located at a distance from the object (6) which is 0.5 to 1.3 times its focal length.

4. Optical system according to claim 1 or 2, characterized by the fact that the dispersive tube lens consists of a positive achromatic element (10) and an afocal dispersive element (15).

5. Optical system according to claim 4, characterized by the fact that the afocal dispersive element (15) is located at a distance from the object (6) which is 0.5 to 1.3 times the focal length of the positive achromatic element (10).

6. Optical system according to claim 1 or 2, characterized by the fact that the adapters feature a mount for interchangeable attachment to the objective housings.

7. Optical system according to claim 4, characterized by the fact that the afocal, dispersive element (15) in the microscope tube can be axially shifted in the range of the parallel beam path between the objective and the achromatic element (10) and serves as an adjusting element for lateral chromatic aberration.

**Revendications**

1. Système optique de microscope, constitué
- d'objectifs (1) à distance frontale finie, qui sont totalement corrigés quant à l'aberration chromatique longitudinale (CHL) dans l'image intermédiaire, mais forment une image intermédiaire (7) affectée d'une aberration chromatique transversale (CHV),
- et d'objectifs à distance frontale infinie, qui forment, en combinaison avec une lentille de tube (20), une image intermédiaire (8), corrigée quant aux aberrations chromatiques longitudinale (CHL) et transversale (CHV),

caractérisé en ce que, pour créer la compatibilité réciproque des deux types d'objectifs,
- l'état de correction chromatique des objectifs (2) à distance frontale infinie est choisi de manière que l'image intermédiaire (8) exempte d'aberration chromatique puisse être formée par une lentille de tube (20) dispersive, qui est sous-corrigée quant à la CHL,
- des adaptateurs dispersifs (4) à puissance de réfraction négative sont prévus pour être fixés aux objectifs (1) à distance frontale finie pour l'utilisation en combinaison avec la lentille de tube (20) dispersive, et des adaptateurs dispersifs (3) à puissance de réfraction positive sont prévus pour être fixés aux objectifs (2) à distance frontale infinie,
- les dispersions et les puissances de réfraction des adaptateurs (3) à puissance de réfraction positive sont égales entre elles et concordent avec les valeurs correspondantes pour la lentille de tube (20) dispersive, et les dispersions et puissances de réfraction des adaptateurs (4) à puissance de réfraction négative sont égales entre elles et concordent quant aux valeurs avec la valeur correspondante pour la lentille de tube (20) dispersive et,
- lors du dimensionnement de la lentille de tube (20) et des adaptateurs, on a respecté, pour l'essentiel, la condition

$$\sum_i \frac{Li}{v_{di} \cdot f_i} = CHV \qquad (1)$$

où

$v_d$ = le nombre d'Abbe des verres employés pour les lentilles ou les composants des éléments accolés,

f = la distance focale des lentilles ou des composants des éléments accolés,

L = l'éloignement du plan principal des objectifs utilisés, en combinaison avec la lentille de tube, par rapport à la pupille de sortie, et

CHV = l'aberration chromatique transversale à compenser de ces objectifs.

2. Système optique de microscope, constitué

- d'objectifs (1) à distance frontale finie, qui sont totalement corrigés quant à l'aberration chromatique longitudinale (CHL) dans l'image intermédiaire, mais forment, en combinaison avec un système de lentilles TELAN (10, 11) achromatique, une image intermédiaire (7) affectée d'une aberration chromatique transversale (CHV), et

- d'objectifs (2) à distance frontale infinie qui, en combinaison avec une lentille de tube (20), forment une image intermédiaire (8) corrigée quant aux aberrations chromatiques longitudinale (CHL) et transversale (CHV),

caractérisé en ce que, pour créer la compatibilité réciproque des deux types d'objectifs (1, 2),

- l'élément négatif (11) du système de lentilles TELAN est retiré du tube et réalisé sous forme d'un adaptateur achromatique (14) à fixer à l'objectif (1) à distance frontale finie,

- l'état de correction chromatique des objectifs (2) à distance frontale infinie est choisi de manière que l'image intermédiaire (8) exempte d'aberration chromatique puisse être formée par une lentille de tube (20) dispersive, qui est sous-corrigée quant à la CHL,

- des adaptateurs dispersifs (4) à puissance de réfraction négative sont prévus pour être fixés aux objectifs (1) à distance focale finie pour l'utilisation en combinaison avec la lentille de tube dispersive (20), et des adaptateurs dispersifs (5) à puissance de réfraction 0 (adaptateurs afocaux) sont prévus pour être fixes aux objectifs (2) à distance frontale infinie pour l'utilisation en combinaison avec l'élément achromatique (10) positif du système de lentilles TELAN (10, 11),

- les dispersions des adaptateurs à puissance de réfraction 0 sont égales entre elles et concordent avec la valeur correspondante pour la lentille de tube (20), et les dispersions et puissances de réfraction des adaptateurs (4) à puissance de réfraction négative sont égales entre elles et concordent quant aux valeurs avec la valeur correspondante pour la lentille de tube (20) dispersive et,

- lors du dimensionnement de la lentille de tube (20) et des adaptateurs, on a respecté, pour l'essentiel, la condition

$$\sum_i \frac{Li}{v_{di} \cdot f_i} = CHV \qquad (1)$$

où

$v_d$ = le nombre d'abbe des verres employés pour les lentilles ou les composants des éléments accolés,

f = la distance focale des lentilles ou des composants des éléments accolés,

L = l'éloignement du plan principal des objectifs, utilisés en combinaison avec la lentille de tube, par rapport à la pupille de sortie, et

CHV = l'aberration chromatique transversale à compenser de ces objectifs.

3. Système optique selon la revendication 1 ou 2, caractérisé en ce que la lentille de tube (20) est une lentille symétrique dont les plans principaux sont éloignés de l'objet (6) d'une distance correspondant à 0,5 à 1,3 fois leur distance focale.

4. Système optique selon la revendication 1 ou 2, caractérisé en ce que la lentille de tube dispersive est constituée d'un élément achromatique (10) positif et d'un élément dispersif (15) afocal.

5. Système optique selon la revendication 4, caractérisé en ce que l'élément dispersif (15) afocal est éloigné de l'objet (6) d'une distance correspondant à 0,5 à 1,3 fois la distance focale de l'élément achromatique (10) positif.

6. Système optique selon la revendication 1 ou 2, caractérisé en ce que les adaptateurs possèdent une monture par laquelle ils sont fixés interchangeables aux boîtiers des objectifs.

7. Système optique selon la revendication 4, caractérisé en ce que l'élément dispersif (15) afocal est déplaçable axialement dans le tube du microscope, dans la région du faisceau parallèle entre l'objectif et l'élément achromatique (10), et sert d'élément d'ajustement pour le réglage de l'aberration chromatique transversale.

Fig.1

Fig.3

Fig.2

Fig.4

Fig.5 Fig.6 Fig.7 Fig.8 Fig.9

## Fig.10

Obj.E, CHV = 1,4%

λ [nm]

644

546

CHL

480

0 019 263

# Fig.11a

Obj. $U_1$ , CHV=1,5%

$\lambda$ [nm]

644

546

CHL

480

# Fig.11 b

A 3, CHV=-0,1%
TL 20, CHV = -1,6%

$\lambda$ [nm]

644

546

CHL

480

# Fig.11c

Fig.3, CHV=1,4%
Fig.2, CHV=-0,1%

$\lambda$ [nm]

644

546

CHL

480

0 019 263

# Fig.12a

Obj. $U_2$, CHV = 1,6%

$\lambda$ [nm]

644

546

CHL

480

# Fig.12b

A 3, CHV = -0,2 %

TL 20, CHV = -1,6 %

$\lambda$ [nm]

644

546

CHL

480

# Fig.12c

Fig.3, CHV = 1,4 %

Fig.2, CHV = 0

$\lambda$ [nm]

644

546

CHL

480

0 019 263

# Fig.13a

Obj. U$_3$, CHV =1,5%

# Fig.13b

A 3, CHV= -0,1%

TL 20, CHV= -1,6%

# Fig.13c

Fig.3, CHV=1,4%
Fig.2, CHV=-0,1 %

Fig.14a

Obj. E, CHV =1,4%

Fig.14b

A 4, CHV = 0,2 %
TL 20, CHV=-1,6 %

Fig.14c

Fig.4, CHV = 0

0 019 263

# Fig.15a

Obj. $U_2$, CHV = 1,6 %

# Fig.15b

A5, CHV = − 0,2 %
TL15, CHV = −1,6 %

# Fig.15c

Fig.7, CHV = 1,4 %
Fig.8, CHV = 0

# Fig.16a

Obj. E, CHV·=1,4%

λ [nm]

644

546

CHL

480

# Fig.16b

A 14, CHV=0

TL 11,10, CHV=0

λ [nm]

644

546

CHL

480

# Fig.16c

Fig. 5, CHV=1,4%
Fig. 6, CHV=1,4%

λ [nm]

644

546

CHL

480